# EUROPEAN PATENT APPLICATION

(11) **EP 2 987 721 A1**
(43) Date of publication of application: **24.02.2016**
(21) Application number: 14855047.8
(22) Date of filing: 28.08.2014
(51) Int. Cl.: B64C 7/02, B64D 29/02

(54) **NOSE CONE STRUCTURE FOR PYLON OF AIRCRAFT WITH WING-HUNG LAYOUT**

(30) Priority: 24.10.2013 CN 201310506992
(71) Applicant: Commercial Aircraft Corporation Of China Ltd, Shanghai 200120 (CN); Commercial Aircraft Corporation Of China Ltd Shanghai Aircraft Design and Research Institute, Shanghai 201210 (CN)
(72) Inventor: CHEN, Yingchun, Shanghai 201210 (CN); ZHANG, Miao, Shanghai 201210 (CN); YU, Zhehui, Shanghai 201210 (CN); ZHANG, Meihong, Shanghai 201210 (CN); XUE, Fei, Shanghai 201210 (CN); LIU, Tiejun, Shanghai 201210 (CN); ZHANG, Dongyun, Shanghai 201210 (CN); ZHOU, Feng, Shanghai 201210 (CN); MA, Tuliang, Shanghai 201210 (CN); ZHAO, Binbin, Shanghai 201210 (CN)
(74) Representative: Bergmeier, Werner
(86) International application number: PCT/CN2014/085417
(87) International publication number: WO 2015/058585

(57) **Abstract**

The present invention provides a nose cone structure for a pylon (20) of an aircraft with a wing-mounted layout. The nose cone comprises a front nose cone (21) located in front of a wing leading edge (31) and a rear nose cone (22) located behind the wing leading edge (31). The nose cone is characterized in that at least a part of the rear nose cone (22) is modeled and shaped by cross section control segments and comprises at least one group of latitudinal position control segments (P01, P02, P03, P04) and at least a group of longitudinal position control segments (S01, S02, S03, S04, S05). The rear nose cone of the pylon is shaped by latitudinal position control segments. The pylon design of the present application optimizes the passageway area of the space between the pylon/wing/engine nacelle by controlling the rear nose cone curvature of the pylon without deflection of the rear portion of the pylon.

## Description

### FIELD OF THE DISCLOSURE

The present invention generally relates to the field of aircraft aerodynamic configuration design, and more particularly to a nose cone structure, especially a rear nose cone structure, for a pylon of an aircraft with a wing-mounted layout.

### BACKGROUND OF THE DISCLOSURE

During the flight of the aircraft, both an upper surface and a lower surface of the wing can generate a lift force. Generally, during the cruising flight, it should be ensured that flow separation is not generated on the upper surface and the lower surface of the wing. As for the aircraft in which an engine is mounted below the wing (i.e., an aircraft with a wing-mounted layout), the upper surface of the wing is not provided with a relatively large protruding part, while the lower surface of the wing contacts a pylon of the engine and is susceptible to the airflow surrounding a pneumatic surface of the nose cone of the pylon. If the lower surface of the wing suffers significant adverse effect from the pneumatic surface of the nose cone of the pylon, the airflow on the lower surface of the wing trends to be separated and it is adverse for the safety and economy of the flight of the aircraft.

For facilitating the description, the pneumatic surface of the nose cone of the pylon will be shorten as "pylon" in the following description.

In the aircraft with a wing-mounted layout, as a part for connecting an engine nacelle and the wing, the pylon is arranged between the engine nacelle and the wing. A side wall of the nose cone of the pylon contacts the lower surface of the wing, and the aerodynamic characteristics of the pylon, i.e., the pressure distribution and the flowing state of the superficial airflow, will directly affect the performance of the lower surface of the wing, and thereby directly affect the performance of the aircraft. Generally, the interior of the nose cone of the pylon needs to have certain volume to arrange necessary pipes and cables, thus the nose cone of the pylon needs to have a certain width. The width constraint and the adverse curvature distribution of the pylon caused by the width constraint have an adverse effect on the wing. When the pylon with a relative large width gradually shrinks to a point towards the rear direction, the airflow on the surface of the pylon trends to be separated and then induces the airflow on the lower surface of the wing to be separated.

In order to reduce or eliminate the adverse effect of the pylon on the lower surface of the wing, local optimization design for the rear part of the pylon is usually needed. Most current aircrafts have made local fairing and shaping for the nose cone of the pylon, for example, in Convair990, a strip nose cone is added in the intersecting portion between the pylon and the wing. Additionally, some aircrafts adopt the solution in which the transition length of the rear part of the pylon is increased. For example, in some current aircrafts produced by Boeing or Airbus, such as B737-300, A320, A330, A340, A380, the pylon is configured to extend rearwards to a position behind the trailing edge of the wing, and a trailing portion in the form of a tapered nose cone is provided to form the tail of the nose cone of the pylon. But this arrangement will add airframe structure parts and actuating structures, thereby increasing the weight of the aircraft as well as the manufacturing cost and the maintenance cost of the aircraft.

In the prior art, for example, US4867394A proposes to arrange the position of the pylon with the maximum width behind the trailing edge of the wing, which avoids the adverse effect of the pylon on the aircraft. However, in the practical engineering, lots of pipes and cables coming from the engine need to be connected to the wing through the rear portion of the pylon, that is to say, the position where the aircraft needs to have a maximum pylon space is located in front of the trailing edge of the wing. Thus, in the above solution, the portion of the pylon with the maximum width is located at the trailing edge of the wing, and the pylon space behind the trailing edge cannot be utilized, but the structure weight of the pylon and fuel consumption will be increased and the carrying capacity of the aircraft will be reduced.US4314681A provides a nose cone in the jointing position between the side wall of the nose cone of the pylon and the wing to improve the aerodynamic characteristics of the aircraft. However, the nose cone arranged in the position adjacent to the wing will decrease the area of the lower surface of the wing, reduce the lift force of the aircraft, and reduce the carrying capacity of the aircraft. To maintain the same carrying capacity, during the flight, the angle of attack of the aircraft needs to be increased to increase the drag force of the aircraft. This solution is not suitable for the initial stage of the design of the aircraft. EPO186220A2 proposes to amend the shape of the section of the wing to improve the aerodynamic performance after the engine is mounted to the aircraft. However, the change of the wing will affect most of the design parameters of the aircraft, and result in large change of the design, thus the designer should avoid the change of the wing as much as possible. If the wing is changed because of the installation of the engine and the design of the pylon, the wing still needs to be changed after a new engine is installed. If the improvement for the subsequent aircraft in a certain series of aircrafts applies this solution, it will delay the airworthiness certification process. That is because the wing is an essential component of the airplane, and the airworthiness certification process relating to the wing needs to be done again if the wing is changed. US20120001022A1 provides a spoiler to improve the aerodynamic performance of the side walls of the pylon. However, the added spoiler generates an additional resistance, and this spoiler works in the wake flow of the engine and needs to be formed by high temperature resistant material, which increases the manufacturing costs. The additional actuators needed by the spoiler will increase the maintenance cost of the aircraft, thus this solution is also not suitable for the initial stage of the design of the airplane. WO9517334A1 designs the pylon by using an integral wing shape as the cross section of the pylon, and this solution needs the cross section of the pylon to deflect towards the fuselage. This solution is suitable in the case that the installing space between the engine and the wing is relatively large. If the installing space is relatively small, this solution cannot optimize its value. Because if the installing space is relatively small, the cross section of the pylon cannot have an integral wing shape, and thus the deflection of the cross section of the pylon in the form of an integral wing shape cannot be obtained. Moreover, this solution may have an adverse effect on the airflow towards the wingtip at the jointing position between the pylon of the aircraft and the front edge of the wing.

### SUMMARY

In order to overcome the above defects existing in the prior art, the present invention provides a nose cone structure for a pylon of an aircraft with a wing-mounted layout, especially a rear nose cone structure having an enough internal space without additionally adding part nose cone on the surface behind the rear portion of the pylon. The present invention enables the air flow on the surface of the nose cone of the pylon not to generate a flow separation, thereby decreasing the resistance, reducing the weight, reducing the adverse effect caused by the engine mounted to the wing and enhancing the performance of the airplane.

To this end, according to one embodiment, the present invention provides a nose cone structure for a pylon of an aircraft with a wing-mounted layout, the nose cone structure comprising a front nose cone located in front of a wing leading edge and a rear nose cone located behind the wing leading edge, wherein at least part of the rear nose cone is modeled and shaped by cross section control segments, and comprises at least one group of latitudinal position control segments and at least one group of longitudinal position control segments. Through formation of the rear nose cone of the pylon by the position control segments, the invention can control the pylon with the horizontal and longitudinal curvatures and the angle of the rear edge of the latitudinal position control segments at the position adjacent to the wing, thereby reducing the interference of the nose cone of the pylon on the wing.

According to one embodiment, a trailing edge line of the rear nose cone has a convex arc shape projecting towards a trailing edge of a wing. This arrangement can ensure the internal space needed by the rear nose cone and enable the profile of the rear nose cone to have a more smooth transition from a wider position to the trailing edge line in the direction of the air flow, thereby helping to suppress the air flow separation of the surface of the pylon.

According to one embodiment, the convex arc shape of the trailing edge line is composed of curved line sections and/or straight line sections.

According to one embodiment, the trailing edge line of the rear nose cone directly contacts a surface of a nozzle of an engine. In this way, the present invention can reduce the bottom area of the rear nose cone of the pylon in the wake flow of the engine even to be zero, and thereby reducing the resistance to a large extent and decreasing the usable area of the thermal insulation material.

According to one embodiment, the at least one group of latitudinal position control segments and/or the at least one group of longitudinal position control segments are closed curved lines such as airfoil shapes.

According to one embodiment, the at least one group of latitudinal position control segments and/or the at least one group of longitudinal position control segments are non-closed curved lines such as quadric curves or spline curves.

According to one embodiment, the at least one group of latitudinal position control segments and/or the at least one group of longitudinal position control segments are straight lines.

Through formation of the rear nose cone of the pylon by the horizontal and longitudinal position control segments, the invention can conduct pylon design only through curvature control on the rear nose cone of the pylon, and can optimize the passageway area of the space between the pylon/wing/engine nacelle by controlling the rear nose cone curvature of the pylon without deflection of the rear portion of the pylon. Additionally, the present invention has a trailing edge line protruding towards the trailing edge of the pylon, meanwhile the trailing edge line of the pylon directly contacts the surface of the nozzle of the engine, thus the area of the surface of the nose cone of the pylon immersed in the wake flow of the engine is reduced, thereby reducing the resistance, improving the aerodynamic performance, reducing the adverse effect on the wing, increasing the internal space of the nose cone of the pylon, avoiding the increasing of the weight of the airplane body, and decreasing the manufacturing cost and the maintenance cost of the aircraft.

### BRIEF DESCRIPTION OF THE DRAWINGS

Other characteristics and advantages will become apparent from the following description of the invention. In the figures, the same reference signs indicate the same or similar parts, in which:
- **Fig. 1**: is a schematic view of a nose cone structure for a pylon of an aircraft with a wing-mounted layout according to the present invention;
- **Fig. 2**: is a part enlarged view of a rear nose cone structure in Fig.1, illustrating latitudinal position control segments and longitudinal position control segments;
- **Fig. 3**: is a perspective schematic view of the nose cone structure for the pylon of the aircraft with the wing-mounted layout according to the present invention, illustrating the starting position of a trailing edge line of the pylon.

### DETAILED DESCRIPTION

The following description will describe the nose cone structure of the pylon in an aircraft with a wing-mounted layout. In the following description, some orientation terms, such as "left", "right", "top", "bottom", "front", "back", "guide", "forwards", and "backwards", are used with reference to the directions shown in the drawings, and the orientation terms are used as example rather than limitation. However, it should be appreciated that the described embodiments are only used to illustrate the special form for implementing and applying the present invention in an exemplary manner, rather than limit the scope of the present invention.

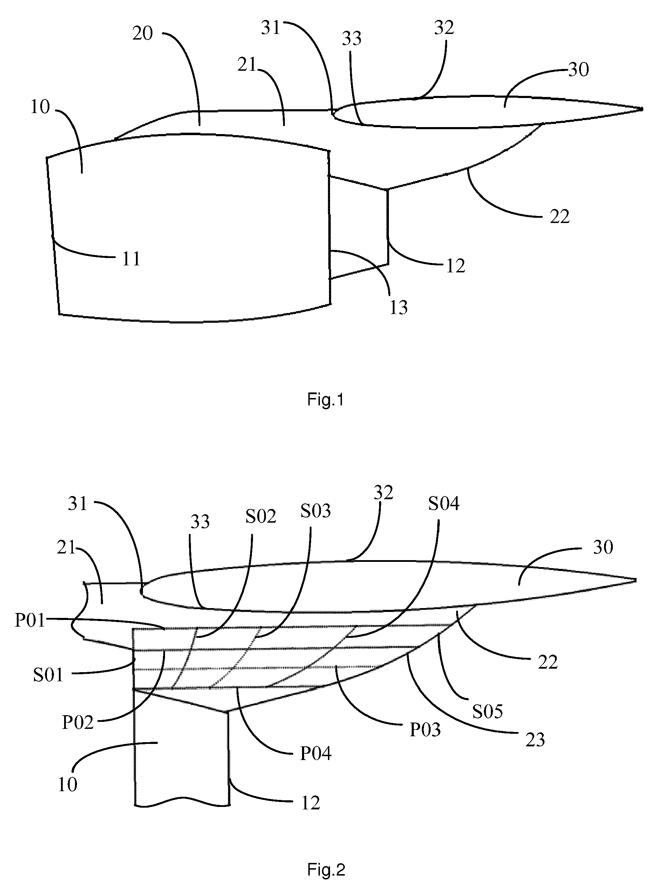

Referring to Figs.1 and 2, according to one preferred embodiment of the present invention, the improvement for the design of the nose cone structure of the pylon is achieved by the sectional control segments modeling for at least one part of the rear nose cone of the pylon. For the person skilled in the art, the modeling technology is well known and thus it is unnecessary to go into details here. In the drawings, the pylon is designated by 20 and used to connect an engine nacelle10 and a wing 30. The engine nacelle 10 comprises an engine intake inlet 11 and an engine fan flow channel outlet 13, and an engine nozzle 12 extends rearwards out of the engine fan flow channel outlet 13. The nose cone structure of the pylon 20 comprises a front nose cone 21 located in front of a wing leading edge 31 and a rear nose cone 22 located behind the wing leading edge 31. The longitudinal sectional line of the front nose cone 21 may terminate at the upper surface 32 or at the lower surface 33 of the wing. The rear nose cone 22 is located below the lower surface 33 of the wing, and a trailing edge line 23 of the rear nose cone 22 generally extends from the lower surface 33 of the wing to the surface of the engine nacelle 10.

In this embodiment, at least part of the rear nose cone22 is modeled and shaped by cross section control segments, and comprises at least one group of latitudinal position control segments and at least one group of longitudinal position control segments. Here, "one group" means at least two control segments, and the person skilled in the art can use two or more control segments to achieve different objectives according to the actual design requirements. Thus, the overall shape of the side wall of the pylon can be controlled by the curvatures of the latitudinal position control segments and the longitudinal position control segments, for example, the pylon can be controlled by the horizontal and longitudinal curvatures and the angle of the rear edge of the latitudinal position control segments so as to reduce the interference of the rear nose cone of the pylon to the wing. In some embodiments, the latitudinal position control segments and/or the longitudinal position control segments may be closed curved lines, such as airfoil shapes, or non-closed curved lines, such as quadric curves or spline curves. Also, the latitudinal position control segments and/or the longitudinal position control segments may also be straight lines. Additionally, in some embodiments, the rear nose cone of the pylon may completely use control line solution, or partly use control line solution, or use integral control line, or use part control line to perform section design.

In the embodiment as shown in Fig. 2, the latitudinal position control segments are straight lines, and include four latitudinal position control segments P01, P02, P03 and P04 extending downwards from the lower surface 33 of the wing and arranged separately; and the longitudinal position control segments are curved lines and include five longitudinal position control segments S01 , S02, S03, S04, S05extending from the engine fan flow channel outlet 13 towards the trailing edge of the wing. The fifth longitudinal position control line S05 is arranged above the trailing edge line 23 of the rear nose cone 22 of the pylon 20. As such, the rear nose cone 22 of the pylon is formed by the latitudinal position control segments, the longitudinal position control segments and the trailing edge line of the pylon, thereby optimizing the passageway area of the space between the pylon/wing/engine nacelle without deflection of the rear portion of the pylon.

As shown in the drawings, the trailing edge line 23 of the pylon 20 according to the present invention preferably is a convex arc projecting towards the trailing edge of the wing. The specific shape of the convex arc is determined by the aerodynamic characteristics of the pylon and may be composed by curved sections and/or sectional straight sections. With this configuration, the design space behind the pylon may be increased so as to ensure the needed internal space, meanwhile the pylon can be transmitted from a wider position (for example, position S01) to the trailing edge line 23 more smoothly in the direction of the air flow, thereby helping to suppress the air flow separation on the surface of the pylon, and preventing from inducing the curvature separation of the lower surface of the wing.

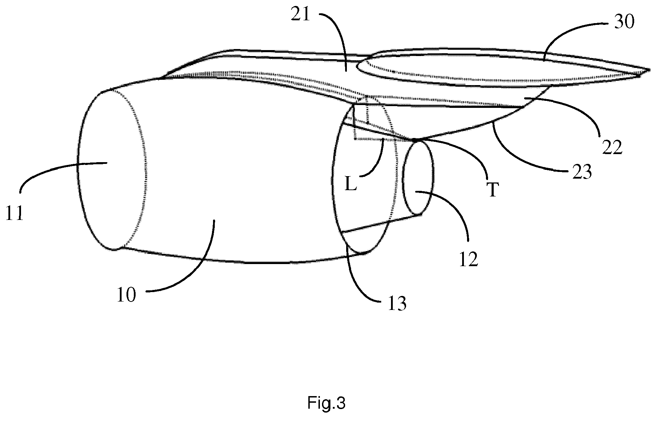

As best shown in Fig. 3, in the present invention, the trailing edge line 23 of the pylon 20 is configured to directly contact the surface of the nozzle 12 of the engine at a point T, thereby the bottom area of the rear part of the pylon in the wake flow area of the engine is substantially reduced to zero. The temperature of the wake flow of the engine is generally high, thus a thermal insulation material is generally added in the area on the surface of the pylon that contacts the wake flow of the engine in order to prevent the surface of the pylon from being burnt by the high temperature airflow. The thermal insulation material has heavy weight and high cost, and the maintenance is not convenient. The present invention can reduce the contact area between the trailing edge of the pylon 20 and the wake flow of the engine as much as possible, reduce the immersion area of the surface of the pylon immersed in the wake flow of the engine, reduce the friction resistance, and increase the airplane performance; since thermal insulation device is not needed, the manufacturing cost can be decreased, the weight of the structure is reduced, the fuel oil is reduced, the payload of the airplane is increased, and the manufacturing cost and the maintenance cost can be decreased.

It should be noted that depending on the actual requirements (for example, the type of the airplane, and the shape of the engine nacelle), the trailing edge line 23 of the pylon 20 can contact with a random point on the surface of the nozzle 12 of the engine so as to reduce the resistance in different degrees. In Fig.3, the distance between the engine fan flow channel outlet 13 and the contact point T between the trailing edge line 23 of the pylon 20 and the nozzle 12 of the engine is designated as L. In a preferred embodiment, L equals to the distance between the engine fan flow channel outlet 13 and the nozzle 12 of the engine.

The above illustrates and describes basic principles, main features and advantages of the present invention. Those skilled in the art should appreciate that the above embodiments do not limit the present invention in any form. Technical solutions obtained by equivalent substitution or equivalent variations all fall within the scope of the present invention.

## Claims

1. A nose cone structure for a pylon (20) of an aircraft with a wing-mounted layout, the nose cone structure comprising a front nose cone (21) located in front of a wing leading edge (31) and a rear nose cone (22) located behind the wing leading edge (31), wherein at least a part of the rear nose cone (22) is modeled and shaped by cross section control segments and comprises at least one group of latitudinal position control segments (P01, P02, P03, P04) and at least one group of longitudinal position control segments (S01, S02, S03, S04, S05).

2. The nose cone structure for a pylon (20) of an aircraft with a wing-mounted layout according to Claim 1, wherein a trailing edge line (23) of the rear nose cone (22) has a convex arc shape projecting towards a trailing edge of a wing.

3. The nose cone structure of a pylon (20) in an aircraft with a wing-mounted layout according to Claim 2, wherein the convex arc shape of the trailing edge line (23) is composed of curved line sections and/or straight line sections.

4. The nose cone structure of a pylon (20) in an aircraft with a wing-mounted layout according to Claim 1, wherein the trailing edge line (23) of the rear nose cone (22) directly contacts a surface of a nozzle of an engine.

5. The nose cone structure of a pylon (20) in an aircraft with a wing-mounted layout according to Claim 1, wherein the at least one group of latitudinal position control segments (P01, P02, P03, P04) and/or the at least one group of longitudinal position control segments (S01, S02, S03, S04, S05) are closed curved lines.

6. The nose cone structure of a pylon (20) in an aircraft with a wing-mounted layout according to Claim 5, wherein the at least one group of latitudinal position control segments (P01, P02, P03, P04) and/or the at least one group of longitudinal position control segments (S01, S02, S03, S04, S05) are airfoil shapes.

7. The nose cone structure of a pylon (20) in an aircraft with a wing-mounted layout according to Claim 1,wherein the at least one group of latitudinal position control segments (P01, P02, P03, P04) and/or the at least one group of longitudinal position control segments (S01, S02, S03, S04, S05) are non-closed curved lines.

8. The nose cone structure of a pylon (20) in an aircraft with a wing-mounted layout according to Claim 7,whereinthe at least one group of latitudinal position control segments (P01, P02, P03, P04) and/or the at least one group of longitudinal position control segments (S01, S02, S03, S04, S05) are quadric curves or spline curves.

9. The nose cone structure of a pylon (20) in an aircraft with a wing-mounted layout according to Claim 1, where in the at least one group of latitudinal position control segments (P01, P02, P03, P04) and/or the at least one group of longitudinal position control segments (S01, S02, S03, S04, S05) are straight lines.
